Europäisches Patentamt

(19) European Patent Office

Office européen des brevets

(11) Numéro de publication : **0 035 508**
**B1**

(12) FASCICULE DE BREVET EUROPÉEN

(45) Date de publication du fascicule du brevet :
11.05.83

(51) Int. Cl.³ : **A 23 L   1/226**

(21) Numéro de dépôt : **80901454.1**

(22) Date de dépôt : **08.08.80**

(86) Numéro de dépôt international :
**PCT/CH 80/00097**

(87) Numéro de publication internationale :
**WO WO/81008 (02.04.81 Gazettee 81/08)**

(54) CETONE INSATUREE AROMATISANTE.

(30) Priorité : 18.09.79 CH 8409/79

(43) Date de publication de la demande :
16.09.81 Bulletin 81/37

(45) Mention de la délivrance du brevet :
11.05.83 Bulletin 83/19

(84) Etats contractants désignés :
CH DE FR GB LI NL

(56) Documents cités :
DE A 2 318 805
DE A 2 444 003
FR A 1 305 994
FR A 1 384 137
FR A 2 005 165
FR A 2 119 580
US A 3 904 780
J. C. Leffingwell et al. « Tobacco Flavouring for smoking products », 1972, R. J. Reynolds Tobacco Company, page 43, « 6-Methyl-5, hepten-2-one »
S. Arctander « Perfume and flavor chemicals » 1969, no 1253 and 2043

(73) Titulaire : FIRMENICH SA
Case postale 239
CH-1211 Genève 8 (CH)

(72) Inventeur : PICKENHAGEN, Wilhelm
Chemin du Mont-Mussy
CH-1290 Chavannes-des-Bois, VD (CH)

(74) Mandataire : Salvadori, Giuseppe, Dr.
c/o Firmenich S.A. Case Postale 239
CH-1211 Genève 8 (CH)

(56) Documents cités : Néant
Journal of Organic Chemistry, vol. 37, no 5, 1972, R. J. Liedtke et al. « Mass spectrometry in structural and stereochemical problems, CCXV » pages 776-789
Journal of the Science of Food and Agriculture, vol. 28, 1977, P.A.T. Swoboda et al. « Metallic odour caused by vinyl ketones formed in the oxidation of butterfat. The identification of octa-I, cis-5-dien-3-one », pages 1019-1024

## 0 035 508

Cétone insaturée aromatisante

### Domaine technique

L'invention se rapporte au domaine des arômes, plus particulièrement à l'emploi d'une cétone aliphatique insaturée, la 7-méthyl-oct-3-ène-2-one, à titre d'ingrédient aromatisant.

### Technique antérieure

Il est tout à fait remarquable de constater que parmi les nombreux composés cétoniques insaturés appréciés dans l'art pour leurs propriétés gustatives, l'essentiel de ceux-ci est constitué par la classe des aldéhydes aliphatiques insaturés. Le déc-2-énal par exemple s'utilise dans la reconstitution d'arômes de type fruité, principalement d'agrumes ou de pêche, de même que l'hex-2-énal qui, sous sa forme isomérique trans, s'utilise plus particulièrement dans des compositions de type fraise, banane, pomme ou abricot. Parmi les aldéhydes $\alpha,\beta$-insaturés substitués en position $\alpha$, on peut citer par exemple le 2-butyl-but-2-énal dont l'arôme, qualifié de doux, rôti et gras, rappelle celui des noisettes. Certains aldéhydes $\beta$, $\gamma$- ou $\gamma,\delta$-insaturés finalement, tel l'hept-4-énal, s'utilisent dans la reconstitution de notes gustatives de type crémeux et gras.

Par contre, aucune des cétones homologues correspondantes n'a soulevé d'intérêt semblable, ni rencontré une application industrielle dans le domaine des arômes bien que celles-ci ne présentent pas plus de problèmes de synthèse ou de stabilité que les aldéhydes sus-mentionnés, exception faite de la 2-méthyl-hept-2-ène-6-one, qui s'utilise à l'état de traces dans des arômes de type fruité tels que pomme, banane, agrumes, cassis ou framboise par exemple — voir à ce sujet S. Arctander, Perfume and Flavor Chemicals, N. J. 1969 ; section 2043 —.

Il est vrai cependant que l'art antérieur fait état des propriétés olfactives et gustatives présentées par plusieurs cétones insaturées. Notamment, il convient de citer :

FR-A-1, 384, 137 qui décrit dans des termes généraux que certaines cétones mono- et polyinsaturées possèdent des odeurs intéressantes et d'autres propriétés qui les rendent utiles comme aromatisants et en parfumerie ;

FR-A-1, 305, 994 qui cite en particulier la préparation de la 3-méthyl-octa-1,3-diène-7-one et suggère son utilisation dans des compositions de parfumerie ;

FR-A-2, 005, 165 qui décrit la préparation de cétones-$\gamma,\delta$ insaturées et cite en particulier la 7-méthyl-non-6-ène-3-one ;

FR-A-2, 119, 580 qui suggère l'utilisation de cétones aliphatiques insaturées, telle la 4,4-diméthyl-5-cis-heptène-2-one et la 5-cis-nonène-2-one, en tant qu'agents parfumants et aromatisants, l'odeur desdites cétones étant de type gras-lactonique ;

DE-A-23 18 805 qui décrit l'utilisation de la 8-nonène-2-one en tant qu'agent aromatisant notamment pour la reconstitution d'arômes de type beurre, fromage, crème et lait ;

DE-A-24 44 003 qui décrit la 6-méthyl-octa-5,7-diène-2-one et indique que son odeur est de type fruité, melon et vert ;

J. C. Leffingwell et al. (Tobacco Flavoring for Smoking Products, R.J. Reynolds Tobacco Co. *1972*), qui indiquent que la 6-méthyl-5-heptène-2-one exerce un effet adoucissant dans le tabac en lui conférant un goût vert ;

P. A. T. Swoboda et al. (J. Sci. Fd. Agric., *22*, 1019 (1977), qui décrivent les qualités odorantes de la oct-1-ène-3-one et de la octa-1,cis-5-diène-3-one formées lors de l'oxydation de la graisse de beurre.

Il a été maintenant trouvé que la 7-méthyl-oct-3-ène-2-one possédait d'intéressantes propriétés organoleptiques et qu'elle pouvait être de ce fait avantageusement utilisée à titre d'ingrédient aromatisant pour l'aromatisation d'aliments ou de boissons par exemple.

### Exposé de l'invention

L'invention a pour objet un procédé destiné à renforcer, améliorer ou modifier les propriétés organoleptiques d'aliments ou de boissons, caractérisé en ce qu'on y ajoute la 7-méthyl-oct-3-ène-2-one, en quantité suffisante pour être efficace.

Elle a également pour objet une composition aromatisante, de même qu'un aliment ou une boisson contenant la 7-méthyl-oct-3-ène-2-one à titre d'ingrédient organoleptiquement actif.

L'invention a finalement pour objet un procédé destiné à conférer, renforcer ou améliorer la note gustative de type huileux-vert d'aliments soumis à friture, caractérisé en ce qu'on y ajoute la 7-méthyl-oct-3-ène-2-one, en quantité suffisante pour être efficace, ainsi qu'un aliment soumis à friture ou destiné à la friture auquel on a ajouté la 7-méthyl-oct-3-ène-2-one à titre d'ingrédient aromatisant.

### Meilleure manière de réaliser l'invention

La 7-méthyl-oct-3-ène-2-one se caractérise par une note gustative de type gras, huileux, vert, terreux, noix, rappelant plus précisément le goût des pommes-de-terre frites, de la cacahuète, de la viande de

2

porc et du lard. Elle trouve de ce fait une utilisation particulièrement avantageuse dans l'aromatisation d'aliments soumis à friture ou destinés à la friture, au sein desquels elle renforce efficacement la note de type huileux-vert caractéristique des aliments soumis à friture.

Plus généralement, la 7-méthyl-oct-3-ène-2-one permet de développer, renforcer ou améliorer les notes de type gras, huileux, viande, noix ou cacahuète d'aliments fort divers, par exemple d'aliments à base de viande ou imitant la viande, destinés tant à l'alimentation humaine qu'à celle des animaux.

La 7-méthyl-oct-3-ène-2-one trouve en outre une utilisation tout à fait inattendue dans l'aromatisation de produits oléagineux, les huiles végétales plus particulièrement, au sein desquelles elle développe une note gustative de type vert caractéristique de l'huile d'olive.

Les quantités de 7-méthyl-oct-3-ène-2-one à utiliser pour obtenir des effets aromatisants tels que ceux définis ci-dessus sont le plus généralement comprises entre 0,1 et 10 ppm (parties par million) environ par rapport au poids de matière aromatisée. On utilise de préférence la 7-méthyl-oct-3-ène-2-one à raison de 0,5 à 5 ppm environ, bien que des concentrations allant en-deçà ou au-delà des limites données ci-dessus soient également utilisables, notamment lors de la préparation de compositions aromatisantes. Il est de toute façon du ressort de l'homme du métier de découvrir lui-même les quantités les plus appropriées aux effets recherchés, en fonction notamment de la nature du produit à aromatiser ou de celle des coingrédients d'une composition donnée.

La 7-méthyl-oct-3-ène-2-one peut être incorporée telle quelle aux aliments ou boissons à aromatiser, ou encore en mélange avec d'autres ingrédients aromatisants, par conséquent sous forme de composition aromatisante, de préférence en solution dans un solvant comestible tel que l'alcool éthylique, le dipropylène-glycol ou la triacétine par exemple.

La 7-méthyl-oct-3-ène-2-one est un produit connu : elle peut être par exemple obtenue à partir de 4-méthyl-pentanal et de chlorure de 2-oxo-propyl-triphénylphosphonium comme indiqué dans J. Org. Chem. *37*, 776 (1972). On peut également l'obtenir par scission de la base de Schiff correspondante, selon la méthode dite de Wittig pour aldolisation dirigée — voir par exemple « Neuere Methoden der präparativen organischen Chemie » Vol. VI, p. 56-57, W. Forst Verlag —. Le détail de cette préparation figure ci-dessous :

a) A 14,3 g de di-isopropylamine en solution dans 72 ml d'éther absolu, on a ajouté 100 ml d'une solution de butyl lithium 1,62 N dans l'hexane. Après avoir refroidi le mélange ci-dessus à 0 °C, on y a progressivement ajouté une solution de 19,8 g de N-propylidène-cyclohexylamine dans 115 ml d'éther absolu (addition en environ 15 min.) puis, à − 70 °C, 14,3 g de 4-méthyl-pentanal. Après avoir agité le mélange réactionnel tout en le laissant progressivement atteindre la température ambiante, on l'a versé sur de la glace et finalement extrait à l'éther. Après évaporation des parties volatiles, on a recueilli 34 g de résidu.

b) Celui-ci a ensuite été chauffé durant 2 h 30 à reflux, en présence de 136 ml de $H_2SO_4$ à 10 % dans l'eau pour donner après extraction à l'éther, lavages successifs jusqu'à neutralisation et concentration, 17 g de résidu brut. Après distillation sur colonne de type FISCHER, on a finalement isolé 14 g du produit désiré, Eb. 73-77 °C/10 Torr. Le produit obtenu a été caractérisé comme suit :

RMN : signaux à 0,82, 0,89, 1,33-1,75, 1,93, 2,13, 3,11 et 5,47 δ ppm ;

SM : m/e = 125(16), 97(44), 82(28), 71(28), 55(90), 43(100).

Selon l'analyse, la 7-méthyl-oct-3-ène-2-one ainsi préparée se présente sous la forme d'un mélange isomérique cis/trans environ 30 : 70. Comme tout autre mélange isomérique tel qu'obtenu selon la voie synthétique choisie, celui-ci convient parfaitement bien à la réalisation de la présente invention.

Possibilités d'application industrielle

Exemple 1

On a procédé à l'aromatisation d'une solution aqueuse saline (0,5 % de NaCl dans l'eau) à l'aide de 7-méthyl-oct-3-ène-2-one, à raison de 1 ppm (partie par million). Le groupe d'experts consulté s'est exprimé comme suit : goût de pommes-de-terre frites, cacahuète, plus particulièrement pelure de cacahuète, bouillon de viande, type viande de porc, graisse, lard.

Exemple 2

On a procédé à l'aromatisation d'une huile de soja commerciale, relativement neutre de goût à l'aide de 7-méthyl-oct-3-ène-2-one, à raison de 5 ppm. Après avoir été comparé à un échantillon d'huile non aromatisé (témoin), le produit aromatisé a été qualifiée de plus vert, plus fruité-noix que l'échantillon témoin ; l'arôme total perçu rappelle en outre celui de l'huile d'olive.

Exemple 3

Un échantillon de beurre de cacahuète commercial a été aromatisé à l'aide de 7-méthyl-oct-3-ène-2-one à raison de 3 ppm. Après avoir été comparé à un échantillon du même beurre, non aromatisé, le produit aromatisé a été décrit comme possédant un caractère de cacahuète plus prononcé, plus particulièrement en ce qui concerne la note verte, terreuse et rôtie typique de la cacahuète.

Exemple 4

On a procédé à l'aromatisation d'un échantillon d'une huile végétale hydrogénée, relativement neutre de goût, à l'aide de 7-méthyl-oct-3-ène-2-one et à raison de 10 ppm.

Des échantillons d'un produit extrudé à base de 75 % de maïs et 25 % de pomme-de-terre déshydratée ont ensuite été enrobés d'huile aromatisée comme indiqué ci-après (parties en poids) :

| Ingrédients | Echantillon A | B[1] |
|---|---|---|
| Produit extrudé | 80 | 80 |
| Huile aromatisée | 20 | — |
| Huile non aromatisée | — | 20 |
| Total | 100 | 100 |

[1] échantillon témoin

Après avoir procédé à une évaluation organoleptique, le groupe d'experts consulté s'est exprimé comme suit : le produit aromatisé possède un arôme total de type huileux, frit plus prononcé que celui de l'échantillon témoin ; note de type pommes-de-terre frites, noix, cacahuète plus marquée.

## Revendications

1. Procédé destiné à renforcer, améliorer ou modifier les propriétés organoleptiques d'aliments ou de boissons, caractérisé en ce qu'on y ajoute la 7-méthyl-oct-3-ène-2-one.

2. Procédé destiné à conférer, renforcer ou améliorer la note gustative de type huileux-vert d'aliments soumis à friture, caractérisé en ce qu'on y ajoute la 7-méthyl-oct-3-ène-2-one.

3. Procédé suivant les revendications 1 ou 2, caractérisé en ce que la 7-méthyl-oct-3-ène-2-one est ajoutée à raison de 0,1-10 parties par million par rapport au poids de l'aliment ou boisson aromatisés.

4. Composition aromatisante, caractérisée en ce qu'elle contient la 7-méthyl-oct-3-ène-2-one à titre d'ingrédient organoleptiquement actif.

## Claims

1. Process to reinforce, improve or modify the organoleptic properties of foodstuffs or beverages, characterized by adding thereto 7-methyl-oct-3-en-2-one.

2. Process to confer, reinforce or improve the gustative note of oily-green type of foodstuffs subjected to frying, characterized by adding thereto 7-methyl-oct-3-en-2-one.

3. Process according to claim 1 or 2, characterized in that 7-methyl-oct-3-en-2-one is added in the proportion of 0.1-10 parts per million by weight based on the weight of the flavoured foodstuff or beverage.

4. Flavouring composition, characterized in that it contains 7-methyl-oct-3-en-2-one as organoletically active ingredient.

## Ansprüche

1. Verfahren zum Verstärken, Verbessern oder Modifizieren der organoleptischen Eigenschaften von Lebensmitteln oder Getränken, dadurch gekennzeichnet, dass zu diesen 7-Methyl-oct-3-en-2-on zugefügt wird.

2. Verfahren zum Verleihen, Verstärken oder Verbessern der gebratenen Lebensmittel eigenen öliggrünen Geschmacksnote, dadurch gekennzeichnet, dass 7-Methyl-oct-3-en-2-on zugefügt wird.

3. Verfahren gemäss Anspruch 1 oder 2, dadurch gekennzeichnet, dass 7-Methyl-oct-3-en-2-on in einem Gewichtsverhältnis von 0,1 bis 10 Teilen pro Million des Gewichtes des aromatisierten Nahrungsmittels oder Getränkes zugefügt wird.

4. Aromazusammensetzung, dadurch gekennzeichnet, dass sie 7-Methyl-oct-3-en-2-on als organoleptisch aktiven Bestandteil enthält.